# EUROPÄISCHE PATENTSCHRIFT

(11) **EP 1 213 512 B1**
(45) Veröffentlichungstag und Bekanntmachung des Hinweises auf die Patenterteilung: **15.10.2003**
(21) Anmeldenummer: 01126092.4
(22) Anmeldetag: 02.11.2001
(51) Int. Cl.: F16H 61/04, F16H 61/06

(54) **Verfahren zur Steuerung des Kupplungsdruckes**
Process for controlling the clutch pressure
Procédé pour la régulation de la pression d'un embrayage

(30) Priorität: 07.12.2000 DE 10060724
(43) Veröffentlichungstag der Anmeldung: 12.06.2002
(73) Patentinhaber: Bayerische Motoren Werke Aktiengesellschaft, 80809 München (DE)
(72) Erfinder: Pfisterer, Markus, 82110 Germering (DE)

(56) Entgegenhaltungen:
- WO-A-98/45626
- WO-A-98/45627
- DE-A- 19 917 575

## Beschreibung

Die Erfindung bezieht sich auf ein Verfahren zur Steuerung des Kupplungsdruckes nach dem Oberbegriff des Patentanspruchs 1.

Jede Übersetzungsänderung bei Stufen-Automatikgetrieben in Kraftfahrzeugen führt zu einem Zu- und/oder Abschalten von Kupplungen bzw. Bremsen (im folgenden werden die Kupplungen und Bremsen allgemein als Kupplungen bezeichnet). Im geöffneten Zustand der Kupplungen muss zwischen den Reibscheiben genügend Abstand (sog. Lüftspiel) vorhanden sein, damit kein Verschleiß auftritt und die Schleppmomente zur Erhöhung des Wirkungsgrades möglichst gering sind. Dieses Lüftspiel muss demzufolge aber bei jedem Zuschalten einer Kupplung überwunden werden, bevor Kraftschluss erfolgt und Drehmoment übertragen werden kann. Zum Zuschalten einer Kupplung muss durch eine Kupplungsbefüllung ein Kupplungsdruck aufgebaut werden.

Bisher beginnt die Kupplungsbefüllung und somit die Erhöhung des Kupplungsdruckes erst dann, wenn steuergeräteintern bereits ein Schaltbefehl vorliegt. Ein Schaltbefehl liegt insbesondere dann vor, wenn der Fahrer, beispielsweise durch einen Kick-Down-Befehl, einen Gangwechselwunsch (hier Rückschaltungwunsch) übermittelt. Das Überwinden des Lüftspiels, im folgenden als Reaktionszeit bezeichnet, führt zu einer vom Fahrer spürbaren Wartezeit beginnend mit dem Gangwechselwunsch bis ein Gangwechsel tatsächlich erfolgt.

Die WO 98/45626 offenbart bereits ein Verfahren für ein Automatgetriebe zur Erhöhung der Spontanität des Automatgetriebes für den Fall, dass bei einer initiierten Hochschaltung ein Abbruchkriterium auftritt, wobei dann die Hochschaltung abgebrochen und initiiert durch einen Rückschaltbefehl ein Wechsel zu einer Rückschaltung erfolgt. Im Gegensatz zu dem bis dahin bekannten SdT - bei dem der einmal eingeleitete Hochschaltvorgang erst vollständig ausgeführt und erst nach Ablauf einer anschließenden Wartezeit der Rückschaltvorgang durch einen Rückschaltbefehl initiiert erfolgt - wird bei einem während eines andauernden Hochschaltvorganges gewünschten Rückschaltvorganges die Spontanität des Automatgetriebes deutlich erhöht.

Aus der US 5,307,727 ist bereits ein Verfahren zur Steuerung des Kupplungsdruckes bekannt, bei dem eine Erhöhung des Kupplungsdruckes durch Verwendung einer hydraulischen Bypassleitung beschleunigt wird, wenn von der neutralen Position (N) in die Fahrposition (D) gewechselt wird.

Es ist Aufgabe der Erfindung, die Reaktionszeit bei einem Gangwechsel mit einem elektronisch gesteuerten Automatikgetriebe zu minimieren.

Diese Aufgabe wird durch die Merkmale des Patentanspruchs 1 gelöst. Vorteilhafte Weiterbildungen der Erfindung sind die abhängigen Patentansprüche.

Erfindungsgemäß wird ausgehend vom momentan eingelegten Gang bereits vor dem Vorliegen eines Gangwechselbefehls der Kupplungsdruck zumindest in den zum Einlegen des nächst höheren und/oder nächst niedrigeren Ganges zuzuschaltenden Kupplungen in der Art erhöht, dass das Lüftspiel überwunden wird. Hierbei kann beispielsweise eine pauschale Vorbefüllung der Kupplungen in einem bezüglich des Verschleißes vertretbaren Maß durch die Kupplungsdruckerhöhung realisiert werden. Dabei wird nicht nur eine Vorbefüllung im Sinne der Entfernung von Lufteinschlüssen, sondern bereits ein Ausüben von Kupplungsdruck derart vorgenommen, dass beispielsweise bei einer Reibungskupplung die Reibelemente aneinander anliegen.

Eine Vorbefüllung der Kupplungen wird ereignisabhängig durch entsprechende Kupplungsdruckerhöhung realisiert. Ein Ereignis sind Bedingungen, die einen Gangwechselbefehl erwarten lassen. Hierzu werden beispielsweise die Fahrpedalaktivitäten, die Motordrehzahl, die Geschwindigkeit und/oder ein eingelegtes Fahrprogramm (E (wirtschaftlich) oder S (sportlich)) ausgewertet.

Besonders vorteilhaft ist die erfindungsgemäße frühzeitige Kupplungsdruckerhöhung bei bevorstehenden Rückschaltungen, da diese meist durch eine Aktivität des Fahrers ausgelöst werden. Wird beispielsweise vom Fahrer ausgehend vom E-Fahrprogramm das S-Fahrprogramm gewählt, können ein bis zwei Rückschaltungen erwartet werden. Erfindungsgemäß findet aufgrund dieses Fahrprogrammwechsels beispielsweise eine vorzeitige Kupplungsdruckerhöhung für die beiden nächst niedrigen Gänge statt.

In einer vorteilhaften Weiterbildung der Erfindung wird die erfindungsgemäße vorzeitige Kupplungsdruckerhöhung zeitlich begrenzt, d.h. nur für eine bestimmte Zeit, vorgenommen, um den Verschleiß der Kupplungselemente einzugrenzen. Dies bedeutet, dass die Kupplung nach einer frühzeitigen Kupplungsdruckerhöhung wieder entlüftet wird, wenn innerhalb einer vorgegebenen Zeit kein Gangwechselbefehl vorliegt.

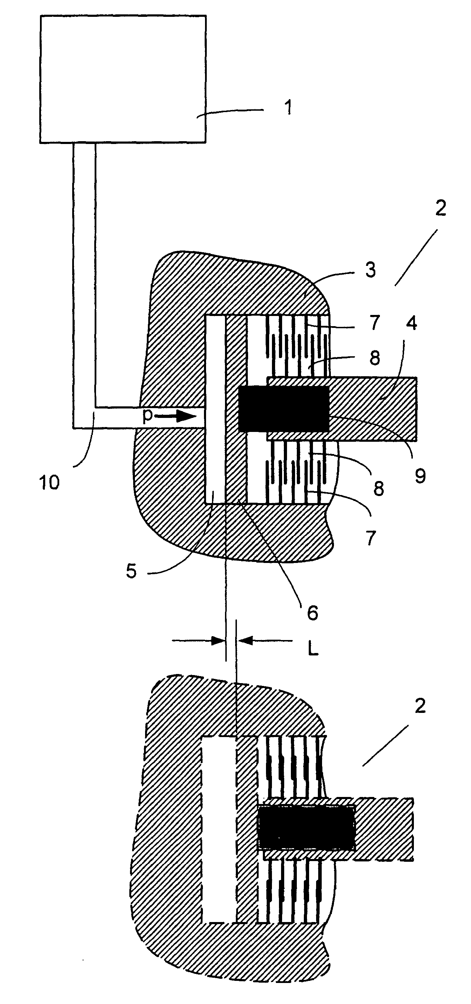

In der Zeichnung ist ein Ausführungsbeispiel der Erfindung dargestellt. Sie zeigt beispielhaft eine Kupplung vor und nach dem Überwinden des Lüftspiels.

In der einzigen Figur sind mit der Steuereinheit 1, sowohl die elektronischen wie auch die hydraulischen Vorrichtungen zur Steuerung des Kupplungsdruckes p in einem Automatikgetriebe zusammengefasst. Über die Hydraulikleitung 10 wird Hydraulikflüssigkeit zur Kupplung 2 transportiert. Die Kupplung 2 ist beispielsweise eine Reibkupplung und besteht bekanntermaßen aus einem Gehäuse 3, einer Kammer 5, einem Kolben 6, aus mit dem Gehäuse 3 verbundenen Reibscheiben 7, aus mit der Ausgangswelle 4 verbundenen Reibscheiben 8 und einer Rückstellfeder 9 zwischen dem Kolben 6 und der Ausgangswelle 4. Durch Beaufschlagung des Kolbens 6 mit Hydraulikflüssigkeit aus der Hydraulikleitung 10 kann ein Kupplungsdruck p aufgebaut werden.

Die Kupplung 2 sei eine zum Einlegen des nächst niedrigeren Ganges zuzuschaltende Kupplung. Ausgehend vom momentan eingelegten Gang wird erfindungsgemäß bereits vor dem Vorliegen eines Gangwechselbefehls, z. B. einer Rückschaltung in den nächst niedrigeren Gang, der Kupplungsdruck p derart erhöht, dass das Lüftspiel L überwunden wird. Das Lüftspiel L ist der Weg, den der Kolben 6 ausgehend von der unbefüllten Kupplung zurücklegt, damit die Reibscheiben 7 und 8 aneinander anliegen (vgl. Figur unten). Hierbei können die Reibelemente 7 und 8 bereits geringfügig aneinander reiben, jedoch erfolgt noch kein Kraftschluss zur Übertragung des Drehmoments. Vorzugsweise wird die Kupplung 2 nach einer vorgegebenen Zeit wieder "entlüftet", d.h. die Erhöhung des Kupplungsdrucks p wird wieder weggenommen, wenn innerhalb dieser vorgegebenen Zeit kein Gangwechselbefehl erfolgt. Erfolgt dagegen ein Gangwechselbefehl innerhalb der vorgegebenen Zeit, ist eine sehr schnelle Reaktionszeit zum tatsächlichen Ausführen des Gangwechsel erreichbar.

Durch diese Erfindung wird sowohl die Sicherheit als auch der Komfort eines Stufenautomatikgetriebes erhöht.

## Patentansprüche

1. Verfahren zur Steuerung des Kupplungsdruckes in einem elektronisch gesteuerten Automatikgetriebe zur Vorbereitung eines Gangwechsels, **dadurch gekennzeichnet, dass** ausgehend vom momentan eingelegten Gang bereits vor dem Vorliegen eines Gangwechselbefehls der Kupplungsdruck (p) abhängig von Bedingungen, die einen Gangwechselbefehl erwarten lassen, zumindest in den zum Einlegen des nächsthöheren und/oder nächstniedrigeren Ganges zuzuschaltenden Kupplungen (2) derart erhöht wird, dass das Lüftspiel (L) überwunden wird, je doch noch kein kraftschluss zur Übertragung eines Drehmomentes besteht.

2. Verfahren nach Patentanspruch 1, **dadurch gekennzeichnet, dass** die Ermittlung über das Vorliegen eines bevorstehenden Gangwechselbefehls in Abhängigkeit von Fahrpedalaktivität, Motordrehzahl, Geschwindigkeit und/oder Fahrprogramm erfolgt.

3. Verfahren nach vorstehendem Patentanspruch, **dadurch gekennzeichnet, dass** bei einer aufgrund eines Fahrprogrammwechsels von einem Fahrprogramm E (wirtschaftlich) in ein Fahrprogramm S (sportlich) bevorstehenden Rückschaltung eine Kupplungsdruckerhöhung für die beiden nächst niedrigeren Gänge erfolgt.

4. Verfahren nach einem der vorstehenden Patentansprüche, **dadurch gekennzeichnet, dass** der Kupplungsdruck (p) zeitlich begrenzt erhöht wird.

## Claims

1. A method for the control of clutch pressure in an electronically controlled automatic gearbox to prepare for a gear change, **characterised in that** starting from the currently engaged gear the clutch pressure (p) is increased depending on conditions which lead to the expectation of a gear change command such that the airplay (L) is overcome, at least in the clutches (2) to be selected for the engagement of the next higher and/or next lower gear, however no frictional engagement exists for the transmission of a torque.

2. A method according to claim 1, **characterised in that** the calculation on the presence of an existing gear change command occurs depending upon accelerator pedal activity, engine revolutions, speed and/or drive program.

3. A method according to the previous claim, **characterised in that** based upon an existing change back of the driving program from the driving program E (economical) to the driving program S (sporting) clutch pressure increase occurs for the two next lower gears.

4. A method according to one of the previous claims, **characterised in that** the clutch pressure (p) is increased with a time limit.

## Revendications

1. Procédé de réglage de la pression d'embrayage dans une boîte de vitesses automatique contrôlée de manière électronique pour préparer un changement de rapport de vitesse,
**caractérisé en ce qu'**
à partir du rapport momentanément engagé, avant qu'il y ait un ordre de changement de rapport, la pression d'embrayage (p) est augmentée en fonction des conditions qui permettent d'attendre un ordre de changement de rapport, au moins dans les embrayages (2) à solliciter pour l'application du rapport supérieur et/ou inférieur le plus proche, de telle sorte que le jeu (L) est absorbé, même s'il n'y a encore aucune adhérence permettant la transmission d'un couple de rotation.

2. Procédé selon la revendication 1,
**caractérisé en ce que**
la détermination de la présence d'un ordre préalable de changement de rapport s'effectue en fonction de l'activité de la pédale d'accélérateur, de la vitesse de rotation du moteur, de la vitesse et/ou du programme de conduite.

3. Procédé selon la revendication précédente,
**caractérisé en ce que**
dans le cas d'une rétrogradation préalable de la vitesse en raison d'un changement de programme de conduite pour passer d'un programme de conduite E (économique) à un programme de conduite S (sportif), il se produit une augmentation de la pression d'embrayage pour les deux rapports inférieurs les plus proches.

4. Procédé selon l'une des revendications précédentes,
**caractérisé en ce que**
l'augmentation de la pression d'embrayage (p) est limitée dans le temps.
